# NEW EUROPEAN PATENT SPECIFICATION

(11) **EP 0 312 228 B2**
(45) Date of publication and mention of the opposition decision: **17.09.1997**
(45) Mention of the grant of the patent: 01.04.1992
(21) Application number: 88309124.1
(22) Date of filing: 30.09.1988
(51) Int. Cl.: C08F 220/18, C09J 133/00

(54) **Polymeric additives for use in adhesive compositions**
Polymeradditive zum Gebrauch in Klebstoffzusammensetzungen
Additifs polymères pour compositions adhésives

(30) Priority: 14.10.1987 US 108854
(43) Date of publication of application: 19.04.1989
(73) Proprietor: ROHM AND HAAS COMPANY, Philadelphia Pennsylvania 19105 (US)
(72) Inventor: Whitmire, Judith Lynne, Lederach Pennsylvania 19450 (US); Lesko, Patricia Marie, Lansdale Pennsylvania 19446 (US); Wood, Timothy Grant, North Wales Pennsylvania 19454 (US)
(74) Representative: Angell, David Whilton

(56) References cited:
- EP-A- 0 173 300
- WO-A-86/05503
- DE-A- 3 215 849
- GB-A- 1 469 682
- GB-A- 2 097 410
- JP-A-58 037 348
- PATENT ABSTRACTS OF JAPAN, vol. 3, no. 27 (C-39), 7th March 1979, page 115 C 39
- Handbook of Pressure-Sensitive Adhesive Technology, Don Satas, Von Nostrand Reinhold Co., pp 307-313, (1982)
- H.G. Elias "makromoleküle", 1990, p. 847
- Ullmanns Encyklopädie der technischen Chemie, 4. Ed., 1976. p. 539
- Polymer Handbook, 2nd ed., 1975, "compatible polymers"
- ASTM Designation D2793-93a
- Journal of Applied Polymer Science, vol. 20, 1976, pp. 2941-2954

## Description

This invention is concerned with polymeric additives for use in adhesive compositions.

Traditionally, natural and synthetic rubbers have been used as pressure-sensitive adhesives, but these rubbers alone do not have the necessary balance of properties of peel strength, shear strength and tack. The rubber-based adhesives typically require the addition of tackifiers, such as rosin acid derivatives or aliphatic/aromatic resins, to impart useful properties as pressure-sensitive adhesives.

Acrylic polymers have also found utility in pressure-sensitive adhesive applications. In most applications, these materials did not require compounding with tackifier resins. Recently, however, it has been shown that tackifiers provide a convenient and useful tool for modifying pressure-sensitive adhesives as discussed by T.G. Wood, "The effects of Tackfication on Waterborne Acrylic Pressure-Sensitive Adhesive", Adhesive Age, Vol. 30, pp. 19-23 (1987). A good discussion on pressure-sensitive adhesives can be found in Handbook of Pressure-Sensitive Adhesive Technology, edited by Don Satas, Van Nostrand Reinhold Co., pp 353-389, (1982).

Japanese Patent Disdosure No. 54-3136 discloses a pressure-sensitive adhesive containing an acrylic polymer and a tackifier. The tackifier is prepared by solution polymerizing 25-75 weight % of vinyl aromatic compound and 75-25 weight % acrylic or methacrylic acid ester, and it has a number average molecular weight of 500-3,000 and a softening point of less than 40°C.

US-A- 3,867,481 disdoses low molecular weight acrylic polymer containing 1) an alkyl methacrylate and 2) one or more additional acrylic/methacrylic acid ester and/or a styrene for use as a processing modifier for rigid polyvinyl halide resins. US-A4,056,559 discloses low molecular weight polymers of alkyl methacrylates having an average chain length of about 6 to about 50 mers and having a variety of uses in films, coatings, adhesives and inks.

Applicants have discovered that pressure-sensitive adhesives can be improved by incorporating therein a polymeric additive having a softening point temperature of at least 47°C. The polymeric additives of applicants' invention result in an improved balance of adhesive properties including peel strength, shear resistance, and/or tack. Compared to adhesives blended with typical commercial tackifiers, the polymeric additives of this invention result in improved film clarity and ultra-violet (UV) stability.

This invention relates to improved adhesive compositions containing a polymeric additive. The polymeric additive is polymerized from one or more monomers selected from (C₁-C₂₀ alkyl and cycloalkyl)acrylates, (C₁-C₂₀ alkyl and cycloalkyl)methacrylates, and optionally other ethylenically unsaturated monomers including free-radical polymerizable olefinic acids. The polymeric additive has number average molecular weight less than 9000 and a softening point of at least 47°C. The additive comprises from 1 to 55% of the adhesive composition on a dry weight basis and is preferably prepared by emulsion polymerization. The additive is preferably polymerized from one or more monomers selected from isobutyl methacrylate, butyl methacrylate, isobomyl methacrylate, cyclohexyf methacrylate, ethyl methacrylate, methyl methacrylate, methacrylic acid, acrylic acid, styrene, alpha-methyl styrene and vinyl toluene. The adhesive composition preferably is a blend of a pressure-sensitive adhesive comprising polymers or copolymers of isoprene, styrene, butadiene, acrylonitrile, ethylene, vinyl acetate, acrylic acid or esters thereof or methacrylic acid or esters thereof or methacrylic acid or esters thereof with the polymeric additive of this invention.

Applicants have invented an improved adhesive composition containing relatively low molecular weight, high softening point polymer additives. Adhesive compositions containing these additives show an improved balance of properties in comparison to adhesive compositions containing no additive. In particular, the adhesive compositions of this invention exhibit an improved balance of tack, peel strength and shear resistance, without the problems in clarity and UV resistance caused when typical rosin or hydrocarbon tackifiers are used.

The polymeric additive of this invention is polymerized from monomers selected from (C₁-C₂₀ alkyl and cycloalkyl)acrylates, (C₁-C₂₀ alkyl and cycloalkyl)methacrylates, and optionally other ethylenically unsaturated monomers including free-radical polymerizable olefinic acids. Suitable alkyl and cydoalkyl acrylates include the various esters of acrylic acid such as methyl acrylate, ethylcrylate, n-propyl acrylate, isopropyl acrylate, n-butyl acrylate, isobutyl acrylate, t-butyl acrylate, isobornyl acrylate, pentyl acrylate, hexyl acrylate, octyl acrylate, iso-octyl acrylate, nonyl acrylate, lauryl acrylate, steryl acrylate, eicosyl acrylate, 2-ethylhexyl acrylate, cyclohexyl acrylate, cycloheptyl acrylate and mixtures thereof. Suitable alkyl and cycloalkyl methacrylate include the esters of methacrylic acid such as methyl methacrylate, ethyl methacrylate, propyl methacrylate, n-butyl methacrylate, t-butyl methacrylate, isobutyl methacrylate, pentyl methacrylate, hexyl methacrylate, cyclohexyl methacrylate, 2-ethylhexyl methacrylate, isobornyl methacrylate, heptyl methacrylate, cydoheptyl methacrylate, octyl methacrylate, iso-octyl methacrylate, nonyl methacrylate, decyl methacrylate, lauryl methacrylate, eicosyl methacrylate and mixtures thereof. Suitable free-radical polymerizable olefinic acids indude acrylic acid, methacrylic acid, fumaric acid, crotonic acid, itaconic acid, 2-acryloxypropionic acid and mixtures thereof. Various amounts of other ethylenically-unsaturated monomers can optionally be used provided that the polymeric additive has a softening point of at least 47°C and a number average molecular weight less than 9000. Optional ethylenically-unsaturated monomers suitable for use according to this invention include, for example, one or more of styrene, alpha-methyl styrene, vinyl toluene, acrylonitrile, methacrylonitrile, ethylene, vinyl acetate, vinyl chloride, vinylidene chloride, acrylamide, methacrylamide 2-cyanoethyl acrylate, 2-cyanoethyl methacrylate, dimethylaminoethyl methacrylate, dimethylaminopropyl methacrylate t-butylaminoethyl methacrylate, glycidyl acrylate, glycidyl methacrylate, benzyl acrylate, benzyl methacrylate, phenyl acrylate, phenyl methacrylate.

The preferred monomers for preparing the polymeric additive are isobutyl methacrylate, butyl methacrylate, isobomyl methacrylate, cyclohexyl methacrylate, ethyl methacrylate, methyl methacrylate, methacrylic acid, and acrylic acid. More preferably the polymeric additive comprises by weight a) about 90-100% isobutyl methacrylate and about 0-10% free-radical polymerizable olefinic acid or b) about 45-90% butyl methacrylate about 10-55% isobomyl methacrylate and about 0-2% free-radical polymerizable olefinic acid. Most preferably the polymeric additive comprises by weight about 50-100% isobutyl methacrylate, about 0-50% methyl methacrylate, and about 0-10% free-radical polymerizable olefinic acid. The most preferred olefinic acid for use in this invention is methacrylic acid. Where stability to ultra-violet radiation is desired, it is preferred that the polymeric additive contain less than 25% by weight, more preferably none, vinyl aromatic monomers.

The polymeric additive of this invention can be prepared by any of the known polymerization processes such as suspension, solution or bulk polymerization but it is preferred to use emulsion polymerization. It is preferred that the polymeric additive be prepared by emulsion polymerization using 1-20 mole percent of a chain transfer agent to achieve low molecular weight. Using emulsion polymerization to prepare polymeric additives of this invention provides advantages of better cost efficiency and mixability with water-based adhesive compositions. Suitable chain transfer agents for this polymerization include, for example, (C₁-C₁₅ alkyl)mercaptans, benzyl mercaptan, 3-mercaptoproprionic acid and esters thereof, mercaptoethanol, benzyl alcohol, alpha-methyl benzyl alcohol, and ethyl mercaptoacetate.

The ability of a polymeric additive to improve the performance of adhesive compositions depends on its molecular weight, softening point, (as determined by ASTM test method #E-2867) and the degree of compatibility between the additive and the adhesive polymer. Compatibility is a measure of the mutual solubility of two materials and compatible blends are characterized by 1) the existence of a single homogeneous phase which contains no discrete domains of either component and 2) a single glass transition temperature for the blend of components as discussed by P.B. Rim and E.B. Older, "Dependence of Tg on Composition for a Compatible Polymer/Oligomer Blend", Macromolecules, Vol. 20, pp. 433-435 (1987). A lack of compatibility is generally evidenced by haziness in the dried film and a decrease in tack. Compatibility is typically favored between materials which are similar in composition and low in molecular weight. In order to modify effectively the performance of an adhesive, the polymeric additives of this invention should show an appreciable degree of compatibility with the adhesive polymer, although the two components need not be completely compatible.

It is desirable to optimize the balance of properties of an adhesive such as peel strength, shear strength, tack, and film clarity. All of these properties are important to adhesive compositions and the best advantages are achieved where the overall balance of these properties have been optimizes. To achieve the necessary balance of adhesive properties, the polymeric additive of this invention must have a number average molecular weight less than 9000 and a softening point of at least 47°C. Preferably the number average molecular weight of the polymeric additive is no greater than 6000, more preferably no greater than 4000, and is preferably at least 600, more preferably from 600 to 6000, most preferably from 600 to 4000.

The polymeric additive of this invention can be added to the adhesive compositions by any known technique, such as by mixing or blending, to uniformly incorporate the additive into the adhesive compositions. The additive is preferably added to the adhesive composition in the form of an aqeous emulsion or an emulsified solution in a combined aqueous/organic solvent medium. An effective amount of the polymeric additive typically ranges from 1% to 55% by weight based on the total dry weight of the adhesive composition.

The polymeric additive of this invention can be used in a variety of adhesive compositions, including pressure sensitive adhesives. These adhesive compositions may contain rubbers such as isoprene and acrylonitrile-butadiene-styrene and polymers or copolymers prepared from styrene, butadiene, ethylene, vinyl acetate, acrylic acid or esters thereof, and methacrylic acid or esters thereof. Preferably the adhesive composition comprises 1) copolymers of ethylene and vinyl acetate or 2) polymers or copolymers prepared from acrylic or methacrylic acid or esters thereof.

The following examples are presented to further describe this invention. The examples are intended to be illustrative and not limitative. The molecular weight of the polymeric additive was determined by gel permeation chromatography using a Styragel Bead column and tetrahydrofuran as the solvent. The column was calibrated using poly(methyl methacrylate) of known molecular weight. The softening point was determined by the Ringand-Ball method (ASTM #E-2867).

The following abbreviations are used in the Examples:
MMA = methyl methacrylate
BMA = butyl methacrylate
IBOMA = isobomyl methacrylate
IBMA = isobutyl methacrylate
STY = styrene
MAA = methacrylic acid
2EHA = 2-ethyl hexyl acrylate
EMA = ethyl methacrylate
n-DDM = n-dodecylmercaptan
APS = ammonium persulfate
SP = softening point
Mn = number average molecular weight

### EXAMPLES I-XXI - EMULSION POLYMERIZATION

Polymeric additives within the scope of this invention, Examples I-XIX, and comparative polymeric additives, Examples XX and XXI, were prepared by emulsion polymerization and had the compositions and physical properties given in Table I. The polymeric additives were prepared using the procedure below.

A 3-liter, 4-necked round bottom flask was charged with 610 grams water and ammonium persulfate (APS) at the levels (Initial Charge) given in Table I. A monomer emulsion feed composed of 280 grams water, 100 grams anionic sulfated surfactant, 1000 grams monomer and n-DDM (as given in Table I) was then added uniformly to the flask over 3 hours while maintaining 84°C polymerization temperature. Simultaneously with the monomer emulsion feed, APS was added at the level (Feed) given in Table I in 45 grams water. Following the monomer addition the batch was held at 84°C for 30 minutes, then cooled to 70°C and 1 gram 28% aqueous ammonia was added. The batch was further cooled to room temperature, filtered, and the polymeric product recovered.

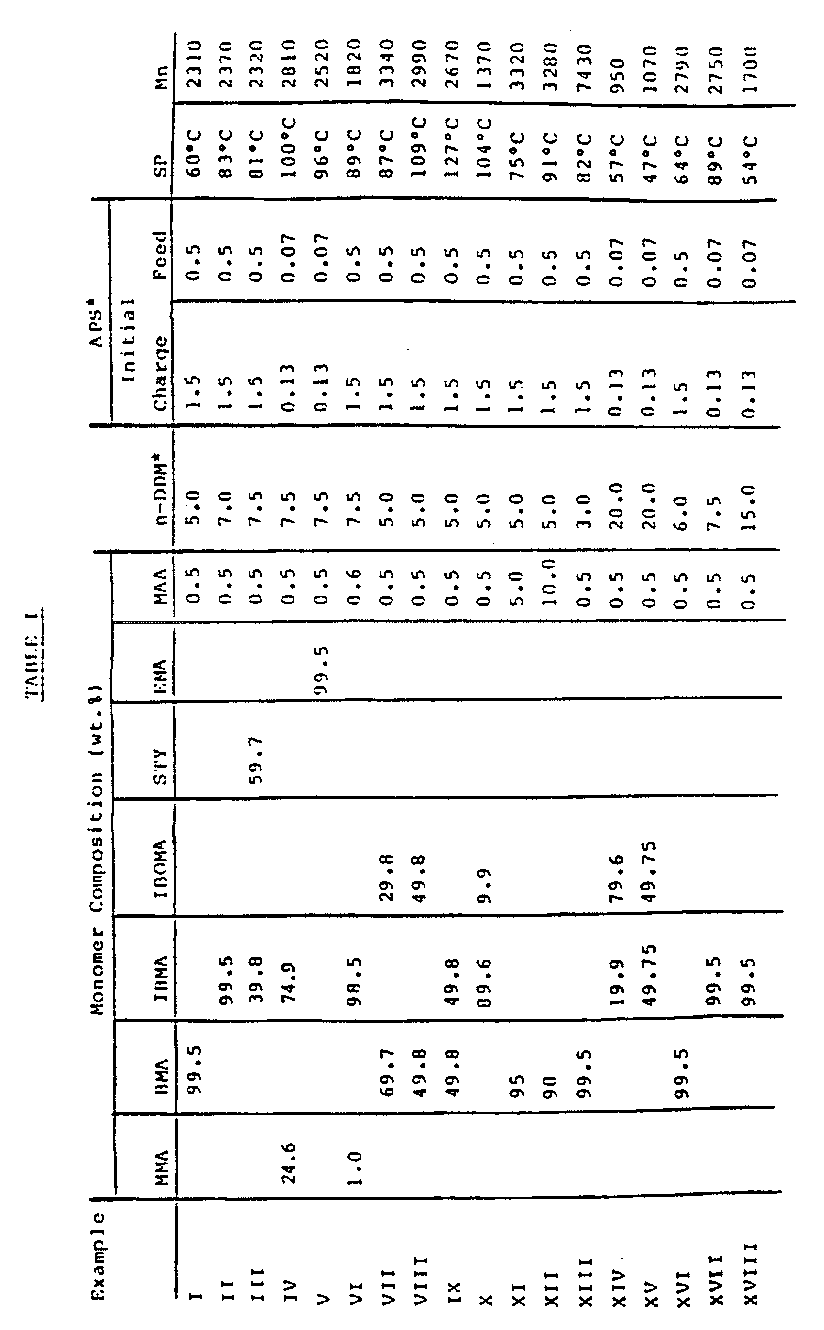

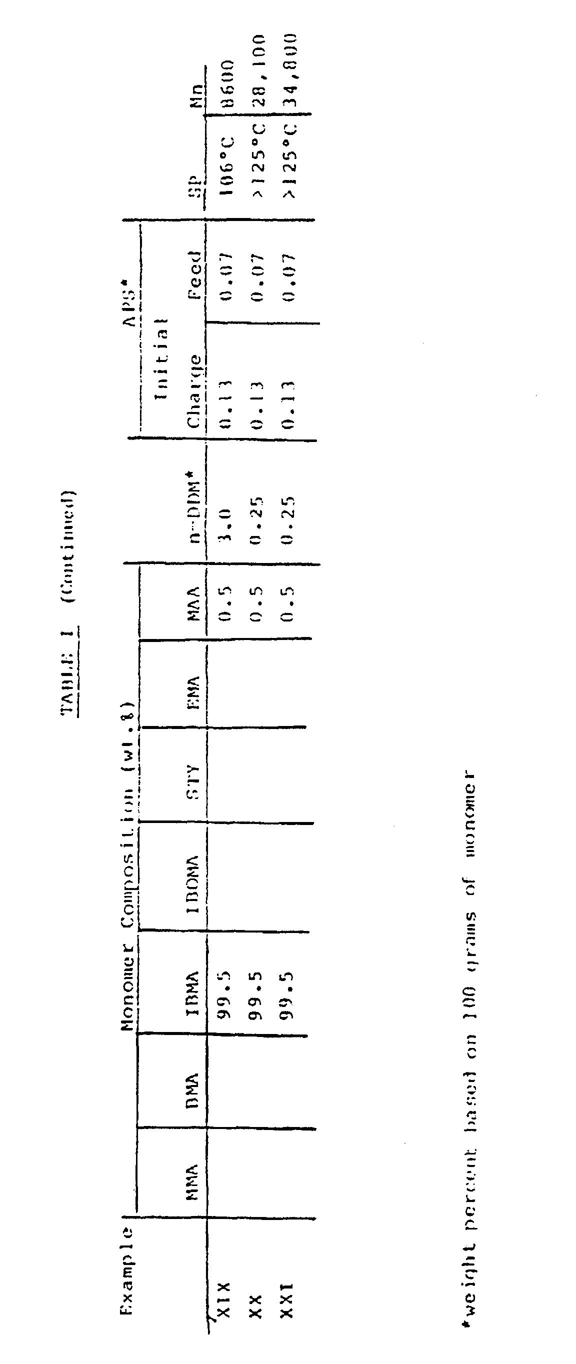

### EXAMPLE XXII-XXIII - COMPARATIVE

Following the procedure for Examples I-XXI, polymeric additives falling outside the scope of this invention (i.e. having a softening point less than 40°C) were prepared for comparative purposes. The compositions and physical properties are given in Table II.

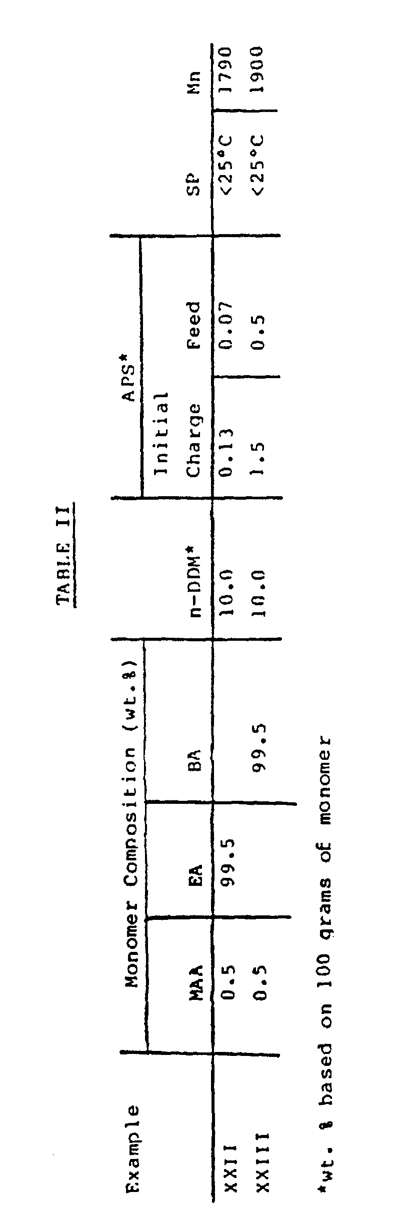

### EXAMPLES XXIV-XXV - COMPARATIVE

Solution polymerization reactions were carried out as described in Japanese patent Disclosure No.54-3136 to prepare polymers for comparison purposes. The polymerizations were carried out using a 1.5 hour gradual addition at 170°C with para-cymene as the solvent. The initiator was di-tert-butyl peroxide at a level of 1 weight % based on total monomer. The compositions and physical properties of the polymers are given in Table III.

**TABLE III**

| Example | Composition (wt%) | | | | |
|---|---|---|---|---|---|
| | 2EHA | BA | STY | SP | MN |
| XXIV | 50 | | 50 | <25°C | 1310 |
| XXV | | 50 | 50 | <25°C | 1260 |

### EXAMPLE XXVI - SOLUTION POLYMERIZATION

A polymeric additive falling within the scope of this invention was prepared by solution polymerization according to the following procedure.

A 2-liter, 4-necked flask was heated and sparged with nitrogen. A monomer mixture was prepared using 800 grams of methyl methacrylate and 200 grams of toluene. A catalyst consisting of 19.7 grams of potassium methoxide (30% in methanol) and 100 grams of the monomer mixture were added to the flask. The flask was heated to 65°C and a gradual addition of 20% of the monomer mixture was started. At the end of that addition the temperature was maintained at 65°C for about 30 minutes. The remaining monomer mixture was then gradually added over 1.5 hours and the temperature was maintained at 65°C for 30 minutes. The final polymeric additive had a softening point of 50°C and a Mn of 600.

### EXAMPLE XXVII - SOLUTION POLYMERIZATION

Following the procedure of Example XXVI, a polymeric additive within the scope of this invention was prepared, except that 400 grams of butyl methacrylate and 400 grams of isobornyl methacrylate were used in the monomer mixture. The final polymeric additive had a softening point of 63°C and a Mn of 1290.

### EXAMPLE XXVIII - ADHESION TESTING

Polymeric additives prepared in the preceding examples were tested for adhesion properties in a butyl acrylate-based emulsion adhesive. The emulsion-polymerized polymeric additives were treated with a 28% aqueous ammonium hydroxide solution to a pH of 9. The solution-polymerized additives were emulsified with deionized water and surfactants. Each of the above emulsions were then blended at various levels with the acrylic emulsion adhesive and the pH adjusted to 9 by addition of ammonium hydroxide solution. The adhesive-additive blends were then coated on acetone-wiped polyethylene terephthalate sheet and dried at 105°C for 5 minutes (or, where indicated, on untreated, biaxially-oriented polypropylene and dried at 70°C for 15 min.). The thickness of the dried adhesive films was 0.001 inches. The coated sheets were then laminated to an untreated polypropylene cover sheet. The laminates were cut into 2.4 cm (1-inch) wide strips and conditioned for at least 24 hours at 25°C and 50% relative humidity prior to testing.

The laminate samples were visually inspected for clarity and rated according to the following scale:
E = excellent film quality with complete clarity
VG = very good film quality with very slight haziness
G = good film quality with slight haziness
F = fair film quality with moderate haziness
P = poor film quality with severe haziness

Peel strengths were determined according to Pressure Sensitive Tape Council Method No. using a 1-minute dwell time. Shear resistances were measured using Pressure Sensitive Tape Council Method No.7 using 1.2 cm x 2.4 cm (1/2x1 inch) overlap areas and 1000 gram weights. Tack was measured using Tag and Label Manufacturers Institute Loop Tack Tester. The results are presented in Table IV and show that the polymeric additives of this invention (i.e. softening point >40°C) show an improved balance of peel strength, shear resistance and tack when compared to the polymeric additives of Examples XXII and XXIII having lower softening points.

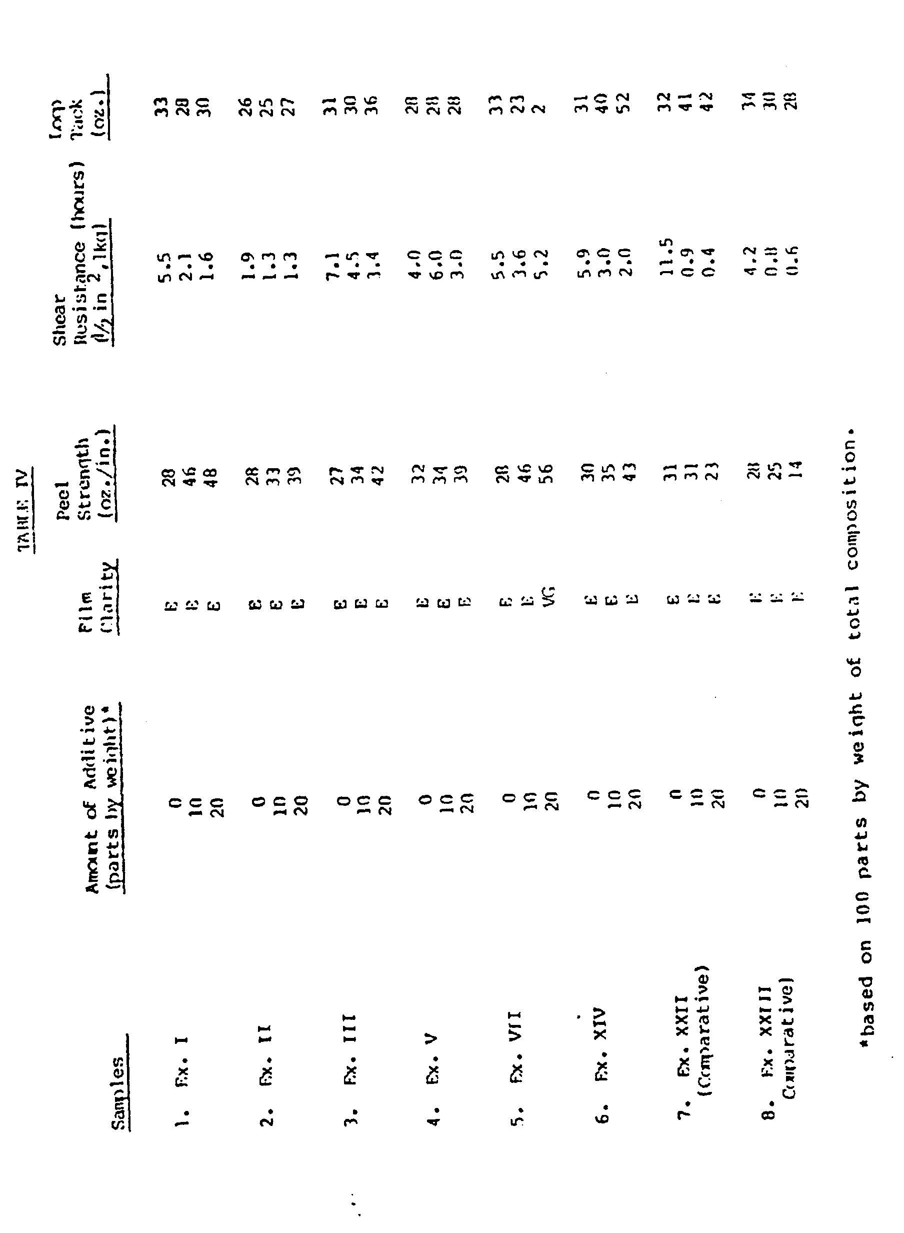

### EXAMPLE XXIX - ADHESION TESTING

Polymers prepared in Examples XXIV and XXV according to Japanese Patent Disclosure No.54-3136 were blended at varying levels with the butyl acrylate-based latex emulsion used in Ex. XXVIII and tested for adhesive performance in comparison to a typical polymeric additive (Ex. IV) within the scope of this invention. The results are given in Table V.

The results show that the polymeric additive of the present invention (having a softening point of 100°C) gives a better overall balance of adhesion properties. Ex. IV had dramatically improved shear resistance, better film clarity and peel strength and similar loop tack Examples XXIV and XXV (having softening points <25°C).

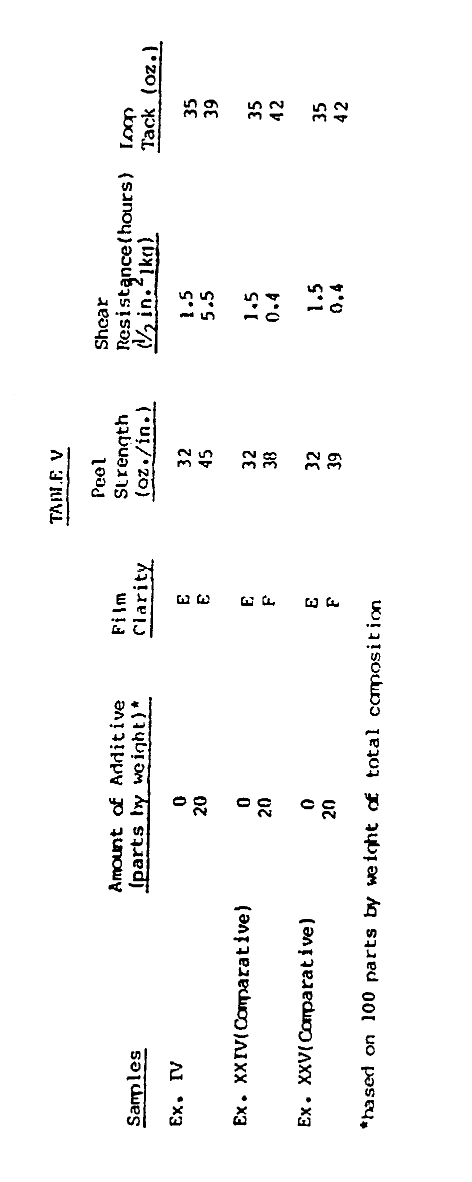

### EXAMPLE XXX - ADHESION TESTING

Polymeric additives within the scope of this invention, prepared in Examples XV and XXVII, were blended at various levels with the acrylic emulsion used in Ex. XXVIII and tested for adhesive performance. The results are given in Table VI and show that relatively high levels (i.e. 40%) of polymeric additive can be used if the molecular weight of the additive is sufficiently low. The higher levels of these very low molecular weight additives result in dramatic improvements in tack and peel strength.

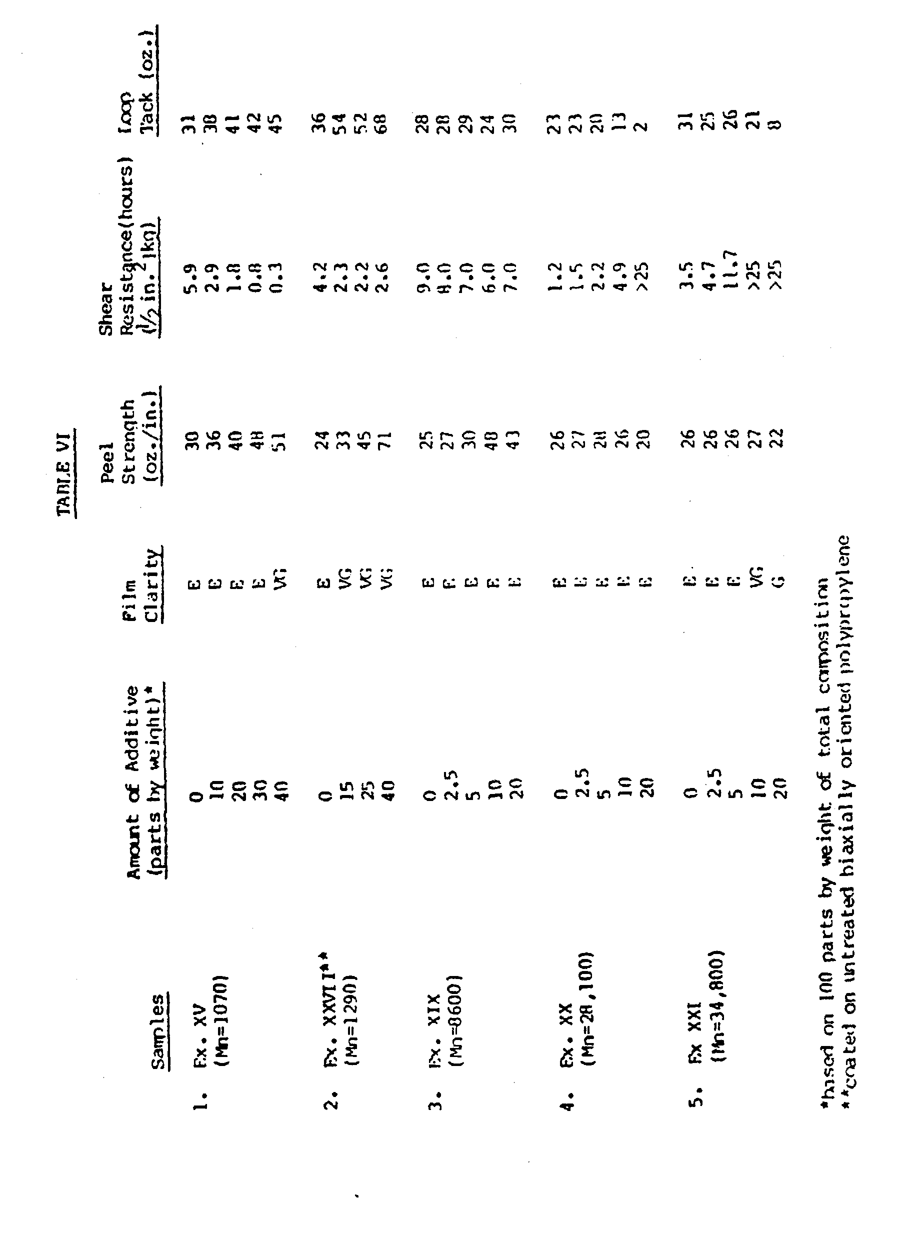

## Claims

1. An adhesive composition comprising a compatible blend of a pressure sensitive adhesive polymer polymerised from one or more monomers of isoprene, styrene, butadiene, acrylonitrile, ethylene, vinyl acetate, acrylic acid or esters thereof, methacrylic acid or esters thereof, or mixtures thereof, and a polymeric additive, characterised in that said polymeric additive comprises from 1 to 55% by weight based on the total dry weight of said adhesive composition and is polymerized, preferably by emulsion polymerization, from one or more monomers selected from (C₁-C₂₀alkyl and cycloalkyl)acrylates, (C₁-C₂₀alkyl and cycloalkyl)methacrylates and optionally other ethylenically unsaturated monomers, and wherein said polymeric additive has a number average molecular weight less than 9000 and a softening point of at least 47°C.

2. A composition as claimed in claim 1, wherein said additive has a number average molecular weight no greater than 6000, preferably no greater than 4000.

3. A composition as claimed in claim 1 or claim 2, wherein said additive has a number average molecular weight of at least 600.

4. A composition as claimed in any one of the preceding claims, wherein said additive is polymerized from one or more monomers selected from methyl acrylate, ethyl acrylate, n-propyl acrylate, isopropyl acrylate, n-butyl acrylate, isobutyl acrylate, t-butyl acrylate, isobornyl acrylate, pentyl acrylate, hexyl acrylate, octyl acrylate, iso-octyl acrylate, nonyl acrylate, lauryl acrylate, steryl acrylate, eicosyl acrylate, 2-ethylhexyl acrylate, cyclohexyl acrylate, cycloheptyl acrylate, methyl methacrylate, ethyl methacrylate, propyl methacrylate, n-butyl methacrylate, t-butyl methacrylate, isobutyl methacrylate, pentyl methacrylate, hexyl methacrylate, cyclohexyl methacrylate, 2-ethylhexyl methacrylate, isobornyl methacrylate, heptyl methacrylate, cycloheptyl methacrylate, octyl methacrylate, iso-octyl methacrylate, nonyl methacrylate, decyl methacrylate, lauryl methacrylate, eicosyl methacrylate, acrylic acid, methacrylic acid, fumaric acid, crotonic acid, itaconic acid, 2-acryloxypropionic acid and mixtures thereof.

5. A composition as claimed in any one of the preceding claims, wherein said optional other ethylenically unsaturated monomers include one or more of styrene, alpha-methyl styrene, vinyl toluene, acrylonitrile, methacrylonitrile, ethylene, vinyl acetate, vinyl chloride, vinylidene chloride, acrylamide, methacrylamide, 2-cyanoethyl acrylate, 2-cyanoethyl methacrylate, dimethylaminoethyl methacrylate, dimethylaminopropyl methacrylate, t-butylaminoethyl methacrylate, glycidyl acrylate, glycidyl methacrylate, benzyl acrylate, benzyl methacrylate, phenyl acrylate, phenyl methacrylate and mixtures thereof.

## Patentansprüche

1. Klebstoffzusammensetzung, umfassend ein verträgliches Gemisch aus einem druckempfindlichen Klebstoffpolymer, welches aus einem oder mehreren Monomeren aus Isopren, Styrol, Butadien, Acrylnitril, Ethylen, Vinylacetat, Acrylsäure oder Estern davon, Methacrylsäure oder Estern davon oder Gemischen davon polymerisiert ist, und ein polymeres Additiv, dadurch gekennzeichnet, daß das polymere Additiv, bezogen auf das Gesamt-Trockengewicht, 1 bis 55 Gew.-% der Klebstoffzusammensetzung umfaßt und bevorzugt durch Emulsionspolymerisation aus einem oder mehreren Monomeren polymerisiert ist, die aus (C₁-C₂₀-Alkyl und Cycloalkyl)-acrylaten, (C₁-C₂₀-Alkyl und -Cycloalkyl)-methacrylaten und gegebenenfalls anderen ethylenisch ungesättigten Monomeren ausgewählt sind, wobei das polymere Additiv ein Zahlenmittel des Molekulargewichts von weniger als 9000 und einen Erweichungspunkt von mindestens 47° C aufweist.

2. Zusammensetzung nach Anspruch 1, wobei das Additiv ein Zahlenmittel des Molekulargewichts von nicht größer als 6000, vorzugsweise von nicht größer als 4000, aufweist.

3. Zusammensetzung nach Anspruch 1 oder 2, wobei das Additiv ein Zahlenmittel des Molekulargewichts von mindestens 600 aufweist.

4. Zusammensetzung nach irgendeinem der vorhergehenden Ansprüche, wobei das Additiv aus einem oder mehreren Monomeren polymerisiert ist, ausgewählt aus Methylacrylat, Ethylacrylat, n-Propylacrylat, Isopropylacrylat, n-Butylacrylat, Isobutylacrylat, t-Butylacrylat, Isobornylacrylat, Pentylacrylat, Hexylacrylat, Octylacrylat, Iso-octylacrylat, Nonylacrylat, Laurylacrylat, Sterylacrylat, Eicosylacrylat, 2-Ethylhexylacrylat, Cyclohexylacrylat, Cycloheptylacrylat, Methylmethacrylat, Ethylmethacrylat, Propylmethacrylat, n-Butylmethacrylat, t-Butylmethacrylat, Isobutylmethacrylat, Pentylmethacrylat, Hexylmethacrylat, Cyclohexylmethacrylat, 2-Ethylhexylmethacrylat, Isobornylmethacrylat, Heptylmethacrylat, Cycloheptylmethacrylat, Octyl methacrylat, Isooctylmethacrylat, Nonyl methacrylat, Decylmethacrylat, Laurylmethacrylat, Eicosylmethacrylat, Acrylsäure, Methacrylsäure, Fumarsäure, Crotonsäure, Itaconsäure, 2-Acryloxypropionsäure und Gemische davon.

5. Zusammensetzung nach irgendeinem der vorhergehenden Ansprüche, wobei die gegebenenfalls anderen ethylenisch ungesättigten Monomere eines oder mehrere aus Styrol, α-Methylstyrol, Vinyltoluol, Acrylnitril, Methacrylnitril, Ethylen, Vinylacetat, Vinylchlorid, Vinylidenchlorid, Acrylamid, Methacrylamid, 2-Cyanethylacrylat, 2-Cyanethylmjthacrylat, Dimethylaminoethylmethacrylat, Dimethylaminopropylmethacrylat, t-Butylaminoethylmethacrylat, Glycidylacrylat, Glycidylmethacrylat, Benzylacrylat, Benzylmethacrylat, Phenylacrylat, Phenylmethacrylat und Gemische davon einschließen.

## Revendications

1. Une composition adhésive comprenant un mélange compatible d'un polymère adhésif sensible à la pression polymérisé à partir d'un ou de plusieurs monomères d'isoprène, de styrène, de butadiène, d'acrylonitrile, d'éthylène, d'acétate de vinyle, d'acide acrylique ou de ses esters, d'acide méthacrylique ou de ses esters, ou de leurs mélanges, et d'un additif polymère, caractérisée en ce que ledit additif polymère représente 1 à 55 % en poids du poids sec total de ladite composition adhésive et est polymérisé, de préférence par polymérisation en émulsion, à partir d'un ou de plusieurs monomères choisis parmi des acrylates (d'alkyle C₁-C₂₀ et de cycloalkyle), des méthacrylates (d'alkyle C₁-C₂₀ et de cycloalkyle) et, facultativement, d'autres monomères éthyléniquement insaturés, ledit additif polymère ayant une masse moléculaire moyenne en nombre inférieure à 9 000 et un point de ramollissement d'au moins 47 °C.

2. Une composition selon la revendication 1, dans laquelle ledit additif possède une masse moléculaire moyenne en nombre inférieure à 6 000, de préférence non supérieure à 4 000.

3. Une composition selon la revendication 1 ou la revendication 2, dans laquelle ledit additif possède une masse moléculaire moyenne en nombre d'au moins 600.

4. Une composition selon l'une quelconque des revendications précédentes, dans laquelle ledit additif est polymérisé à partir d'un ou de plusieurs monomères choisis parmi l'acrylate de méthyle, l'acrylate d'éthyle, l'acrylate de n-propyle, l'acrylate d'isopropyle, l'acrylate de n-butyle, l'acrylate d'isobutyle, l'acrylate de t-butyle, l'acrylate d'isobornyle, l'acrylate de pentyle, l'acrylate d'hexyle, l'acrylate d'octyle, l'acrylate d'isooctyle, l'acrylate de nonyle, l'acrylate de lauryle, l'acrylate de stéaryle, l'acrylate d'eicosyle, l'acrylate de 2-éthylhexyle, l'acrylate de cyclohexyle, l'acrylate de cycloheptyle, le méthacrylate de méthyle, de méthacrylate d'éthyle, le méthacrylate de propyle, le méthacrylate de n-butyle, le méthacrylate de t-butyle, le méthacrylate d'isobutyle, le méthacrylate de pentyle, le méthacrylate d'hexyle, le méthacrylate de cyclohexyle,le méthacrylate de 2-éthylhexyle,le méthacrylate d'isobornyle, le méthacrylate d'heptyle, le méthacrylate de cycloheptyle, le méthacrylate d'octyle, le méthacrylate d'isooctyle,le méthacrylate de nonyle, le méthacrylate de décyle,le méthacrylate de lauryle le méthacrylate d'eicosyle, l'acide acrylique, l'acide méthacrylique, l'acide fumarique, l'acide crotonique, l'acide itaconique, l'acide 2-acryloxypropionique et leurs mélanges.

5. Une composition selon l'une quelconque des revendications précédentes, dans laquelle lesdits autres monomères éthyléniquement insaturés facultatifs comprennent un ou plusieurs des styrène, alpha-méthylstyrène, vinyltoluène, acrylonitrile, méthacrylonitrile, éthylène, acétate de vinyle, chlorure de vinyle, chlorure de vinylidène, acrylamide, méthacrylamide, acrylate de 2-cyanoéthyle, méthacrylate de 2-cyanoéthyle, méthacrylate de diméthylaminoéthyle, méthacrylate de diméthylaminopropyle, méthacrylate de t-butylaminoéthyle, acrylate de glycidyle, méthacrylate de glycidyle, acrylate de benzyle, méthacrylate de benzyle, acrylate de phényle, méthacrylate de phényle et leurs mélanges.
